# EUROPEAN PATENT APPLICATION

(11) **EP 2 112 440 A2**
(43) Date of publication of application: **28.10.2009**
(21) Application number: 09158213.0
(22) Date of filing: 20.04.2009
(51) Int. Cl.: F24J 2/07, F24J 2/12, F24J 2/24

(54) **Device to tap and concentrate solar energy**

(30) Priority: 21.04.2008 IT UD20080088
(71) Applicant: COSTRUZIONI SOLARI S.R.L., 73020 Cavallino LE (IT)
(72) Inventor: Bee, Antonio, 73020 Cavallino (LE) (IT)
(74) Representative: Petraz, Gilberto Luigi

(57) **Abstract**

Device (10) to tap and concentrate solar energy, comprising at least a reflection element (11) able to convey the solar energy in correspondence with at least a pipe (16) inside which a heat-carrier fluid flows, in order to heat the heat-carrier fluid. The tapping and concentration device (10) also comprises conveyor means (13) associated with said pipe (16), able to allow to convey the solar energy in correspondence with the pipe (16) even in conditions where the geometric focalization of the sun's rays is not perfect.

## Description

### FIELD OF THE INVENTION

The present invention concerns a device to tap and concentrate solar energy. In particular, the device according to the present invention is used to convert solar energy into heat energy.

### BACKGROUND OF THE INVENTION

Devices to tap and concentrate solar energy are known, used to convert solar energy into heat energy, comprising one or more mirrors shaped so as to define a parabolic profile, and movement means able to move the mirror/mirrors to follow the movement of the sun. Here and hereafter in the description such devices will be referred to as the tracker type. Said movement means are accurate and highly sophisticated so as to follow the movement of the sun faithfully, so that the rays falling on the mirror/mirrors are always parallel to the geometric axis of the parabola and can therefore be focused perfectly in the focus of the parabola. In correspondence with said focus a receiver element is disposed, inside which a heat carrier fluid flows that is heated by the focused rays and taken to high temperatures.

One disadvantage of such known devices to tap and concentrate solar energy is the accuracy needed by the movement means, which entails high costs of installation, management and maintenance.

This accuracy is entailed by the fact that the absence of parallelism between the geometric axis of the parabola and the incident rays of the sun causes an improper reflection of the rays, so that the device is no longer able to focus all the solar energy exactly in correspondence with the tube. This determines a considerable dispersion of energy and a drastic loss of efficiency of the device.

Currently in tapping and concentration devices, both of the tracker type and the fixed type, a receiver element is used that has a large diameter, so that, even if there is no parallelism between the geometric axis of the parabola and the incident solar rays, the energy is in any case directed in correspondence with the receiver element and the heat-carrier fluid is heated.

One disadvantage of this system is that the use of a tube having a larger diameter than the one normally used determines a reduction in the concentration ratio, that is, the ratio between the inlet area on which the solar rays fall and the area on which the rays are focused; this consequently reduces the efficiency of the device.

Purpose of the present invention is to achieve a device to tap and concentrate solar energy which does not need accurate movement means or to focus the incident solar rays in a precise and accurate manner in correspondence with the receiver element, but in any case maintains a full efficiency of the device and drastically limits the dispersion of energy.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a device to tap and concentrate solar energy is used to convert solar energy into heat energy.

The tapping and concentration device comprises at least a reflection element able to convey and concentrate the solar energy in correspondence with at least a pipe inside which a heat-carrier fluid flows, to heat the heat-carrier fluid. The term pipe comprises both a single pipe and also a plurality of pipe elements associated in series or parallel.

According to a characteristic feature of the present invention, the tapping and concentration device also comprises conveyor means associated with the pipe, able to allow to convey the solar energy in correspondence with the pipe even in conditions where the geometric focalization of the solar rays is not perfect.

The conveyor means comprise at least a container inside which said pipe is disposed, said container being provided at least with a surface made of a material having optical properties such as to promote the inlet of solar energy into the container and to prevent the irradiance toward the outside of the container of the solar energy present therein.

In a preferential form of embodiment the tapping and concentration device is at least partly or totally of the tracker type.

According to a variant of the present invention the container is associated with said reflection element.

According to another variant of the present invention the pipe is associated with solar energy tapping and conduction means, able to convey the solar energy in correspondence with the pipe. The tapping means are disposed inside the container.

In a preferential form of embodiment the tapping means comprise plate elements made of heat conductive material, such as a metal or metal salts.

In another preferential form of embodiment, the pipe is externally associated with a diathermic fluid.

In another preferential form of embodiment the pipe is associated with a metal with a low melting point.

According to another variant of the present invention the reflection element comprises at least a mirror shaped so as to define a substantially parabolic profile.

In this way the device to tap and concentrate solar energy according to the present invention concentrates the solar radiation inside the container and not only in correspondence with a precise focalization point or line, corresponding to the focus of the parabolic profile. Therefore there is no need for the device to be moved with extreme accuracy so that the rays of incident solar radiation are perfectly parallel to the geometric axis of the parabola.

Indeed, the device according to the present invention even tolerates a mis-alignment, within predetermined values, of the incident rays of solar radiation with respect to the geometric axis of the parabola, since using said tapping means allows to transmit to the pipe, by heat conduction, also the heat arriving from the solar radiation that is not perfectly focused. Therefore the device according to the present invention does not need sophisticated and accurate movement means to follow the sun's trajectory accurately, and drastically limits energy dispersion, keeping the device fully efficient in every operating condition.

In a preferential form of embodiment the container is associated with elements made of heat insulating material with low heat conductivity.

According to another variant of the present invention the device according to the present invention comprises reflecting closing means able to keep the solar energy inside the mirror.

These features allow to further reduce the dispersion of solar energy and to keep the device fully efficient in every operating condition.

Furthermore, the container, with the pipe or the pipes inside it, can also be disposed as a kit, which can easily be assembled by the final user and associated simply and quickly with the relative reflection element or elements.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of a tapping and concentration device according to the present invention;
- fig. 2 is a schematic representation of an optical model of the device in fig. 1;
- fig. 3 is a section view of a detail of the device in fig. 1;
- fig. 4 is a section view of a first variant of the detail in fig. 3;
- fig. 5 is a section view of a second variant of the detail in fig. 3;
- fig. 6 is a section view of a third variant of the detail in fig. 3.

### DETAILED DESCRIPTION OF A PREFERENTIAL FORM OF EMBODIMENT

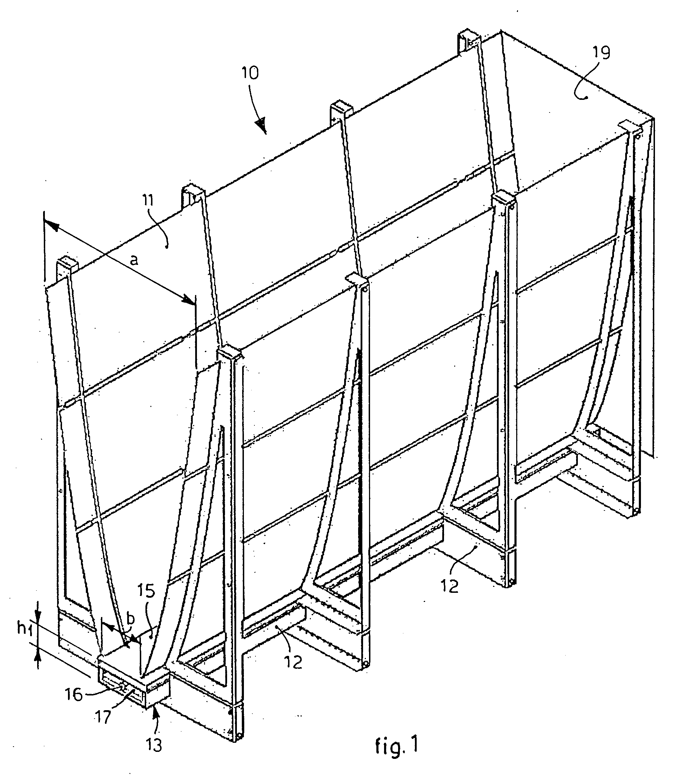

With reference to fig. 1, a device 10 to tap and concentrate solar energy according to the present invention is used to convert solar energy into heat energy.

The device 10 comprises a mirror 11, with high reflectivity, supported by a plurality of supports 12 made of light metal material, for example aluminum, shaped so as to define a substantially parabolic profile in order to accommodate the mirror 11 and confer thereon the same profile.

Advantageously between the mirror 11 and the supports 12 one or more sheets of honeycomb material are interposed, not shown in the drawings, able to confer a curve and structural rigidity on the mirror 11.

The mirror 11 is also advantageously covered by protective layers, not shown in the drawings, able to protect the reflective surface from harmful atmospheric agents and able to limit the deposit of dust or other impurities that could reduce the efficiency of the mirror 11.

According to a variant not shown in the drawings, in correspondence with the aperture of the parabolic profile the mirror 11 is provided with a covering element made of transparent material, advantageously glass, Plexiglas® or methacrylate, able to prevent the deposit of dust or other impurities on the mirror 11.

The device 10 also comprises a container 13, associated with the mirror 11, advantageously made of metal material, disposed substantially on the bottom of the mirror 11. In particular the container 13 is disposed so as to contain the focus of the parabolic profile of the mirror 11.

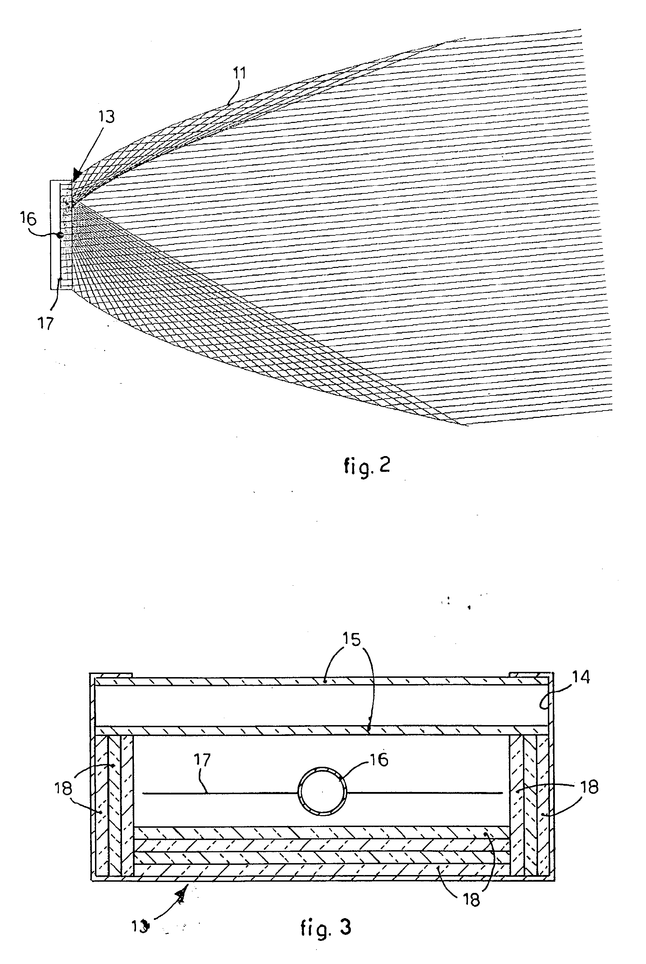

In this case, the container 13 (fig. 3) comprises a box-like body of parallelepiped shape and has a length substantially equal to the longitudinal development of the mirror 11.

The mirror 11, and in particular its curve, is sized so as to obtain a high ratio of concentration, given by the ratio between the upper aperture a of the parabolic profile and the width b of the container 13.

The container 13 is provided with an upper aperture 14 hermetically sealed by a double-glazed chamber 15, able to allow the solar radiation to enter the container 13 and to prevent irradiation toward the outside of the container 13 of the radiation accumulated therein.

A tube 16, or a plurality of tubes 16 associated in series or parallel, inside which a heat-carrier fluid is able to flow, for example diathermic oil, to be conveyed toward heat accumulation devices, is disposed inside the container 13, normally in correspondence with the focus of the parabolic profile of the mirror 11. In this case, the tube 16 is associated, for example by welding, with a tapping plate 17 advantageously made of a heat conductive material, such as preferably, but not exclusively, copper.

According to a variant of the present invention the tube 16 is externally associated with a diathermic fluid.

Advantageously the tapping plate 17 is subjected to appropriate surface treatments that confer thereon a high absorption power to absorb the solar radiations and simultaneously low emission. The surface treatments comprise for example the deposition of layers of ceramic based material, linings of chrome nitride, titanium oxide, painting with high absorption paints, or any other type of treatment known for the purpose.

The container 13 is internally lined with layers of heat insulating material having reduced heat conductivity, for example aerogel, comprised between 0.010 W/m•K and 0.020 W/m•K, advantageously 0.014 W/m•K.

The layers 18 of insulating material allow to keep inside the container 13 both the heat energy arriving from the solar radiations and also the infrared radiation emitted by the tube 16 and by the tapping plate 17, heated by the solar radiations falling upon them.

The device 10 also comprises a closing glass 19, associated with the rear part of the mirror 11. The closing glass 19 is able to convey toward the mirror 11 and/or inside the container 13 those solar radiations that would otherwise be dispersed in correspondence with the rear part of the mirror 11.

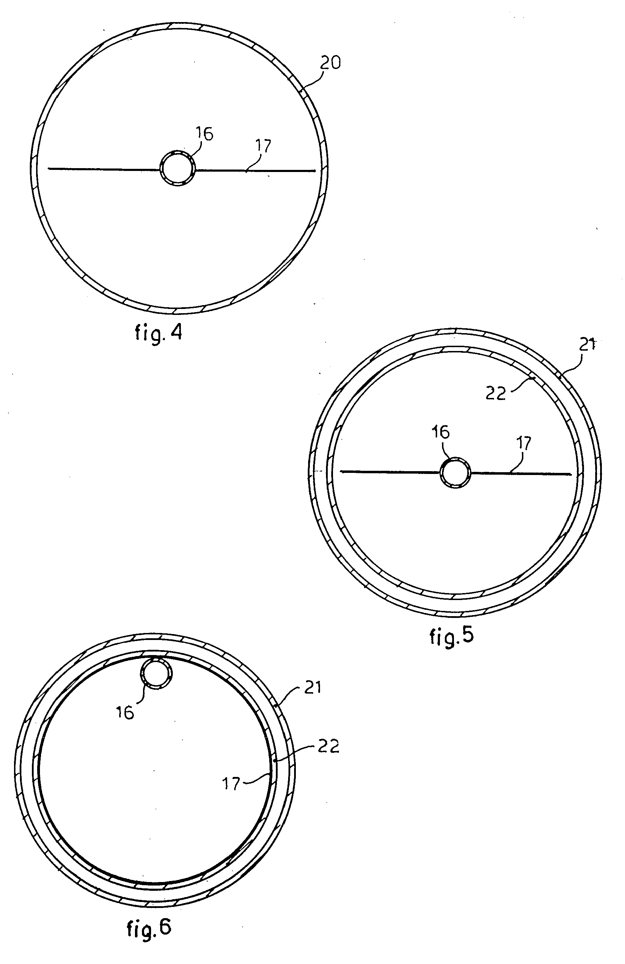

According to a variant of the present invention the container 13 (fig. 4) is made with a tube 20 of glass material, inside which there is a vacuum.

According to another variant of the present invention the container 13 (fig. 5) is made with two concentric tubes 21, 22 of glass material between which there is a vacuum.

According to another variant of the present invention (fig. 6) the tapping plate 17 has a circular shape, and internally lines the wall of the tube 22 made of glass material of the container 13 made according to the variant shown in fig. 5.

The device also comprises movement means, of a known type and not shown in the drawings, able both to allow the device 10 to rotate on the azimuth and/or zenith plane, and also to vary the inclination thereof with respect to the horizontal plane, in order to optimize the tapping of the solar radiations according to the environmental conditions where the device 10 is installed, and the different latitudes where the device 10 can be installed.

The device 10 as described heretofore functions as follows.

The solar radiations falling on the mirror 11, shown schematically in fig. 2 by straight lines, are reflected by the walls of the mirror 11 and concentrated inside the container 13. When there is a parallelism between the geometric axis of the parabolic profile of the mirror 11 and the solar rays, the latter are focused in correspondence with the tube 16, disposed substantially in correspondence with the focus of the parabola. If there is a mis-alignment between the solar rays and the geometric axis of the parabola, as shown schematically in the optical model in fig. 2, the radiations are in any case conveyed inside the container 13. Due to the effect of the double-glazed chamber 15, the solar energy is not dispersed and, furthermore, due to the effect of the heat conduction of the tapping plate 17, the solar energy is in any case conveyed in correspondence with the tube 16 in order to heat the heat-carrier fluid.

In this way the movement means of the device 10 do not have to be accurate and are not obliged to follow the trajectory of the sun faithfully so that the sun's incident rays are always parallel to the geometric axis of the parabola.

It is understood that the acceptable mis-alignment between the axis of the parabola and the incident solar rays is determined in advance. On the basis of this information the container 13 and its position are therefore appropriately sized. In particular the distance h1 of the double-glazed chamber 15 with respect to the top of the parabola is a function of said mis-alignment. The greater the acceptable mis-alignment, the greater the value of h1 will be required.

It is clear that modifications and/or additions of parts may be made to the tapping and concentration device 10 as described heretofore, without departing from the field and scope of the present invention.

It is also clear that, although the present invention has been described with reference to some specific examples, a person of skill in the art shall certainly be able to achieve many other equivalent forms of tapping and concentration device 10, having the characteristics as set forth in the claims and hence all coming within the field of protection defined thereby.

## Claims

1. Device to tap and concentrate solar energy, comprising at least a reflection element (11) able to convey the solar energy in correspondence with at least a pipe (16) inside which a heat-carrier fluid flows, in order to heat said heat-carrier fluid, also comprising conveyor means (13) associated with said pipe (16), able to allow to convey the solar energy in correspondence with said pipe (16) even in conditions where the geometric focalization of the sun's rays is not perfect, **characterized in that** said conveyor means comprise at least a container (13), associated with said reflection element (11), inside which said pipe (16) is disposed, said container (13) being provided at least with a surface (15, 20, 21, 22) made of a material having optical properties such as to promote the entry of the solar energy into the container (13) and to prevent the irradiance toward the outside of the container (13) of the energy in the container (13).

2. Tapping and concentration device as in claim 1, **characterized in that** the container (13) comprises a box-like body provided with an aperture (14) hermetically sealed by a double-glazed chamber (15).

3. Tapping and concentration device as in claim 1, **characterized in that** the container (13) comprises a tube (20) made of glass material inside which a vacuum is made.

4. Tapping and concentration device as in claim 1, **characterized in that** the container (13) comprises at least two concentric tubes (21, 22) made of glass material inside which a vacuum is made.

5. Tapping and concentration device as in any claim hereinbefore, **characterized in that** the pipe (16) is associated with means (17) to tap and conduct the solar energy, disposed inside the container (13) and able to tap the solar energy and to convey it in correspondence with the pipe (16).

6. Tapping and concentration device as in claim 5, **characterized in that** the tapping means comprise plate elements (17) made of heat conductive material.

7. Tapping and concentration device as in claim 6, **characterized in that** the heat conductive material comprises metal or metal salts.

8. Tapping and concentration device as in claim 6, **characterized in that** the plate elements (17) are lined with one or the other of ceramic material, chrome nitride and titanium oxide.

9. Tapping and concentration device as in any claim hereinbefore, **characterized in that** the pipe (16) is externally associated with a diathermic fluid.

10. Tapping and concentration device as in any claim hereinbefore, **characterized in that** the pipe (16) is associated with a metal having a low melting point.

11. Tapping and concentration device as in any claim hereinbefore, **characterized in that** the reflection element comprises at least a mirror (11) shaped so as to define a substantially parabolic profile, wherein the focus of said parabolic profile is disposed inside said container (13).

12. Tapping and concentration device as in any claim hereinbefore, **characterized in that** the container (13) is internally associated with elements (18) made of heat insulating material with low heat conductivity.

13. Tapping and concentration device as in claim 12, **characterized in that** the heat insulating material comprises aerogel.

14. Tapping and concentration device as in any claim hereinbefore, **characterized in that,** in correspondence with the aperture of the parabolic profile, the mirror (11) is provided with a covering element made of transparent material able to prevent the deposit of impurities on the mirror (11).

15. Tapping and concentration device as in any claim hereinbefore, **characterized in that** the container (13), with the pipe or pipes (16) inside it, is prepared as a kit that can easily be assembled by the final user and associated with the relative reflection element s (11).
